Europäisches Patentamt

European Patent Office

Office européen des brevets

(11) Veröffentlichungsnummer: **0 096 271**
**B1**

(12)
# EUROPÄISCHE PATENTSCHRIFT

(45) Veröffentlichungstag der Patentschrift: **02.03.88**

(21) Anmeldenummer: **83105063.8**

(22) Anmeldetag: **21.05.83**

(51) Int. Cl.⁴: **B 65 G 69/24**

(54) **Überladebrücke für Rampen.**

(30) Priorität: **04.06.82 DE 3221133**

(43) Veröffentlichungstag der Anmeldung:
**21.12.83 Patentblatt 83/51**

(45) Bekanntmachung des Hinweises auf die
Patenterteilung:
**02.03.88 Patentblatt 88/09**

(84) Benannte Vertragsstaaten:
**AT BE CH DE FR GB IT LI LU NL SE**

(56) Entgegenhaltungen:
**DE-A-2 800 127**
**DE-A-2 950 352**
**US-A-2 714 735**

(73) Patentinhaber: **Alten, Kurt**
**Ringstrasse 14**
**D-3015 Wennigsen (DE)**

(72) Erfinder: **Alten, Kurt**
**Ringstrasse 14**
**D-3015 Wennigsen (DE)**

(74) Vertreter: **Depmeyer, Lothar**
**Auf der Höchte 30**
**D-3008 Garbsen 1 (DE)**

Courier Press, Leamington Spa, England.

**Beschreibung**

Die Erfindung bezieht sich auf eine Überladebrücke für Rampen mit einer an ihrem hinteren Ende um eine waagerechte Querachse an der Rampe schwenkbar gelagerten Brückenplatte und einer am freien Ende der Brückenplatte befindlichen, in Brückenlängsrichtung bewegbaren, ein- und ausfahrbaren Verlängerung zur Auflage und zur Abstützung auf der zu be- bzw. entladenden Plattform, wobei die Brückenplatte unterhalb eines durchgehenden Deckbleches einander parallele Längsträger aufweist und an ihren Rändern mit senkrechten, fest mit der Brückenplatte verbundenen Seitenblechen ausgestattet ist, wobei die Verlängerung mit einem sich etwa über die Brückenbreite erstreckenden Abschnitt zur Auflage auf der Plattform und weiterhin mit einander parallelen Längsträgern versehen ist, die sich von dem Abschnitt aus frei nach hinten erstrecken und zwischen dem Deckblech der Brückenplatte einerseits und einem Querträger andererseits gehalten und geführt sind, und wobei ferner sich die Längsträger im ausgefahrenen Zustand der Verlängerung oberhalb des Querträgers noch überlappen.

Bei bekannten Überladebrücken der vorgenannten Art (US—A—2 714 735), die allerdings mit mehreren Querträgern ausgestattet sind, wird die Brückenplatte seitlich von jeweils einem Längsträger eines Rahmens begrenzt. Diese Längsträger dienen zur Befestigung mehrerer Querträger und eines sich von den Längsträgern aus nach unten erstreckenden Seitenblechs. Dieses Seitenblech hat somit nur die Aufgabe, den Spalt zwischen der Rampenoberfläche und der nach oben geklappten Brückenplatte aus Gründen der Sicherheit zu überbrücken.

Der Erfindung liegt nun die Aufgabe zugrunde, die Überladebrücken der eingangs erwähnten Gattung so auszuführen, dass bei nur einem Querträger seitlich aussen an der Brückenplatte befindliche Längsträger in Fortfall kommen können und insgesamt die Brückenkonstruktion vereinfacht sowie das Tragfähigkeit der Überladebrücke erhöht werden.

Zur Lösung dieser Aufgabe ist erfindungsgemäss der Querträger an seinen endseitigen Stirnflächen mit den die Brückenplatte seitlich abschliessenden und sich von dem Rand des Deckbleches nach unten erstreckenden Seitenblechen verschweisst.

Da der Querträger mit den Seitenblechen verschweisst ist, werden die von dem Querträger aufzunehmenden Kräfte auf die Seitenbleche übertragen, die die Brückenplatte seitlich abschliessen. Die Seitenbleche erfüllen somit die Aufgabe von Festigkeitsträgern und sie überbrücken zudem in wünschenswerter Weise den gefährlichen Spalt zwischen der Brückenplatte und der Rampe.

Zweckmässige Weiterbildungen der erfindungsgemässen Überladebrücke sind in den Ansprüchen 2—9 gekennzeichnet.

Eine solche Brückenkonstruktion ist sehr betriebssicher und belastungsfest; die nach hinten kammartig vorstehenden Längsträger der Verlängerung unterfangen auch den Bereich des Deckbleches der Brückenplatte, der nicht von den Längsträgern der Brückenplatte unterstützt ist.

Weitere Einzelheiten der Erfindung werden anhand der Zeichnung erläutert, in der ein vorzugsweise zur Anwendung kommendes Ausführungsbeispiel dargestellt ist. Es zeigen:

Fig. 1 einen Längsmittelschnitt durch eine in Betrieb befindliche Überladebrücke für Rampen,

Fig. 2 eine Draufsicht auf die Brücke gemäss Fig. 1 und

Fig. 3 einen Schnitt nach der Linie III—III von Fig. 1.

An ihrem hinteren Ende ist die Brückenplatte 1 um eine Querachse 2 an der Rampe 3 mit einer Ausnehmung 4, einer Rampenkante 5 und ihrer Wirkebene 6 schwenkbar gelagert. Am vorderen, freien Ende der Brückenplatte 1 befindet sich eine in Richtung des Doppelpfeiles 7 (Brückenlängsrichtung) hin und her bewegbare Verlängerung 8, die durch einen Zylinder 9 verfahrbar ist und zur Abstützung der Brückenplatte 1 auf der zu be- bzw. entladenden Plattform 10 eines Fahrzeuges dient, wenn sich die Brücke in Betrieb befindet und so eine Folgebewegung der Brückenplatte 1 in Bezug auf eine sich verändernde Höhe der Plattform 10 eintreten kann. Aus diesen Gründen ist die Brücke auch geringfügig kopflastig eingestellt.

Die Verlängerung 8 besteht ihrerseits aus dem zur Auflage auf der Plattform 10 dienenden, etwa winkelförmigen Abschnitt 11, der ununterbrochen von einem zum anderen Brückenrand verläuft. Der etwa waagerechte Schenkel (12) stellt hierbei die Verbindung zur Plattform 10 her, der senkrechte Schenkel 13 hingegen dient zur Befestigung von als Doppel-T-Profilen ausgebildeten Längsträgern 14. Sie sind durch Schweissen befestigt und verlaufen in Richtung des Doppelpfeiles 7, und zwar von dem Abschnitt 11 aus in Richtung auf die Querachse 2. Insgesamt gesehen bildet der Abschnitt 11 zusammen mit den Längstragern 14 ein kammartiges Gebilde.

Die Brückenplatte 1 hat ein bis zur Rampenkante 5 sich erstreckendes, ununterbrochenes Deckblech 15 aus Stahl oder dergleichen. Vom Rand dieses Deckbleches 15 erstrecken sich aus Stahl oder dergleichen bestehende Seitenbleche 16 senkrecht nach unten, die u. a. die Aufgabe haben, den Spalt zwischen einer nach oben geschwenkten Brückenplatte 1 und der Rampe 3 zu überdecken. Über einen grossen Teil der Länge der Brückenplatte 1 ist diese mit von unten am Deckblech 15 befestigten Längsträgern 17 in Parallelstellung versehen, die hinten im Bereich der Querachse 2 enden und im vorderen Bereich von einem doppel-T-förmigen Querträger 18 unterfangen sind, dessen Enden bzw. Stirnflächen fest mit den Seitenblechen 16 verschweisst sind. Auch die Längsträger 17 sind mit dem Querträger 18 verschweisst.

Die Längsträger 14 der Verlängerung 8 sind in einer solchen Anzahl vorgesehen, dass sie je

## 0 096 271

zwischen zwei Längsträger 17 angeordnet werden können, wobei zudem die seitlich aussen gelegenen Längsträger 14 zugleich den seitlichen Abschluss der verfahrbaren Verlängerung 8 bilden, also ebenso wie die seitlichen Ränder des Abschnittes 11 durch die Innenfläche der Seitenbleche 16 geführt werden können. Demgemäss ist vorzugsweise die Anzahl der Längstrager 14 grösser als diejenige der Längsträger 17. Bei dem Ausführungsbeispiel nach der Zeichnung sind demgemäss fünf Längsträger 14 und vier Längsträger 17 vorgesehen.

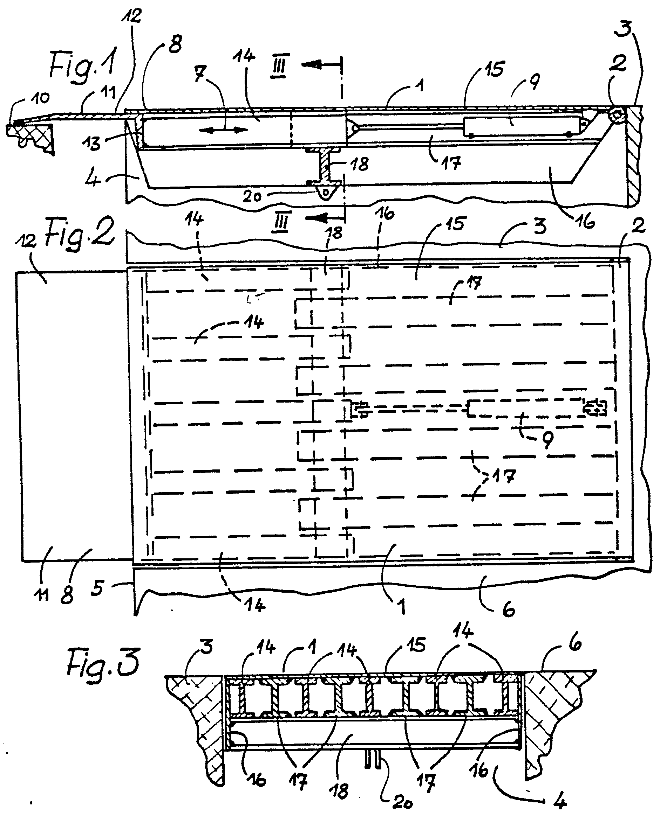

Wie die Fig. 1 und 3 erkennen lassen, stimmt die Höhe der Längsträger 14 mit derjenigen der Längsträger 17 überein; die so gebildeten Zwischenräume zwischen dem Deckblech 15 und dem Querträger 18 erlauben daher die Aufnahme der Längsträger 14 mit einem zum Verfahren ausreichend grossen Spiel. Da zudem sich die Längsträger 14, 17 im Bereich des Querträgers 18 überlappen (vgl. Fig. 2), wenn die Verlängerung 8 voll ausgefahren ist, ergibt sich eine grosse Biegesteifigkeit, auch in dem vorderen Bereich der Brückenplatte 1, die nicht mehr von den angeschweissten Längsträgern 17 unterfangen ist. Somit sind die Längsträger 14 biegesteif zwischen dem Deckblech 15 und dem Querträger 18 gehalten und geführt.

Im eingefahrenen Zustand der Verlängerung 8 tritt eine noch grössere Überlappung der Längsträger 14, 17 ein; der vordere Abschnitt der Brückenplatte wird dann von dem winkelförmigen Abschnitt 11 unterfangen, wodurch die erforderliche Steifigkeit des Brückenverbandes auch für den Nichtgebrauch der Brücke erzielt wird, die in diesem Zustand oben mit der Wirkebene 6 abschliesst.

Es sei noch erwähnt, dass das nicht näher dargestellte Hubwerk zum Anheben der Brücke nach oben — meist ein hydraulischer Hubzylinder — vorzugsweise unten am Querträger 18 — bei 20 angedeutet — angreift.

## Patentansprüche

1. Überladebrücke für Rampen (3) mit einer an ihrem hinteren Ende um eine waagerechte Querachse an der Rampe (3) schwenkbar gelagerten Brückenplatte (1) und einer am freien Ende der Brückenplatte (1) befindlichen, in Brückenlängsrichtung bewegbaren, ein und ausfahrbaren Verlängerung (8) zur Auflage und zur Abstützung auf der zu be- bzw. entladenden Plattform (10), wobei die Brückenplatte (1) unterhalb eines Durchgehenden Deckbleches (15) einander parallele Längsträger (17) aufweist und an ihren Rändern mit senkrechten, fest mit der Brückenplatte (1) verbundenen Seiteblechen (16) ausgestattet ist, wobei die Verlängerung (8) mit einem sich etwa über die Brükenbreite erstreckenden Abschnitt (11) zur Auflage auf der Plattform (10) und weiterhin mit einander parallelen Längsträgern (14) versehen ist, die sich von dem Abschnitt (11) aus frei nach hinten erstrecken und zwischen dem Deckblech (15) der Brückenplatte (1) einerseits und einem Querträger (18) andererseits gehalten und geführt sind, und wobei ferner sich die Längsträger (14, 17) im ausgefahrenen Zustand der Verlängerung (8) oberhalb des Querträgers (18) noch überlappen, dadurch gekennzeichnet, dass der Querträger (18) an seinen endseitigen Stirnflächen mit den die Brückenplatte (1) seitlich abschliessenden und sich von dem Rand des Deckbleches (15) nach unten erstreckenden Seitenblechen (16) verschweisst ist.

2. Brücke nach Anspruch 1, dadurch gekennzeichnet, dass der Querträger (18) mit den Längsträgern (17) der Brückenplatte (1) fest verbunden sind.

3. Brücke nach Anspruch 1, dadurch gekennzeichnet, dass die Längsträger (14) der Verlängerung (8) und die Längsträger (17) der Brückenplatte (1) von gleicher Höhe sind.

4. Brücke nach Anspruch 1, dadurch gekennzeichnet, dass die Verlängerung (8) seitlich aussen von einem Längsträger (14) begrenzt ist, der zur Führung der Verlängerung innen am Seitenblech (16) der Brückenplatte (1) anliegt.

5. Brücke nach Anspruch 1, dadurch gekennzeichnet, dass sich die Längsträger (14, 17) im ausgefahrenen Zustand der Verlängerung (8) oberhalb des Querträgers (18) überlappen.

6. Brücke nach Anspruch 1, dadurch gekennzeichnet, dass das Hubwerk für die Brückenplatte (1) am Querträger (18) angreift.

7. Brücke nach Anspruch 1, dadurch gekennzeichnet, dass die Längsträger (14, 17) genormte, vorzugsweise doppel-T-förmige Stahlprofile sind.

8. Brücke nach Anspruch 5, dadurch gekennzeichnet, dass bei n Längsträgern (17) für die Brückenplatte (1) die Verlängerung (8) n + 1 Längsträger (14) aufweist.

9. Brücke nach Anspruch 1, dadurch gekennzeichnet, dass die Längsträger (14) der Verlängerung (8) an dem senkrechten Schenkel (13) des winkelförmigen Abschnittes (11) der Verlängerung angeschweisst sind.

## Revendications

1. Passerelle de transbordement pour rampes (3) comprenant un tablier (1) qui est monté basculant, par l'extrémité arrière, sur la rampe (3) autour d'un axe transversal et horizontal et une rallonge (8) se trouvant à l'extrémité libre du tablier (1), mobile dans la direction longitudinale de la passerelle et rétractable et dégageable, pour reposer et s'appuyer sur la plateforme à charger ou à décharger, le tablier (1) comportant, endessous d'une tôle de couverture (15) continue, des longerons (17) parallèles entre eux et étant muni sur ses bords de tôles latérales (16) verticales et reliées rigidement au tablier (1), la rallonge (8) étant munie d'une section (11) s'étendant environ sur la largeur de la passerelle et destinée à reposer sur la plateforme (10) et, en outre, de longerons (14) parallèles entre eux, qui partent de la section (11) en ayant leur extrémité arrière libre et qui sont maintenus et guidés entre la tôle de couverture (15) du tablier (1) d'une part et une traverse (18) d'autre part, les longerons (14, 17) se chevauchant au-dessus de la traverse (18), lorsque la rallonge (8) est dégagée, caractérisée en ce que la traverse (18) est soudée par ses surfaces frontales d'extrémité aux tôles latérales (16) terminant latéralement le tablier (1) et s'étendant vers le bas à partir du bord de la tôle de couverture (15).

2. Passerelle suivant la revendication 1, caractérisée en ce que la traverse (18) est reliée rigidement aux longerons (17) du tablier (1).

3. Passerelle suivant la revendication 1, caractérisée en ce que les longerons (14) de la rallonge (8) et les longerons (17) du tablier (1) ont la même hauteur.

4. Passerelle suivant la revendication 1, caractérisée en ce que la rallonge (8) est délimitée latéralement à l'extérieur par un longeron (14) qui, pour le guidage de la rallonge, s'applique à l'intérieur sur la tôle latérale (16) du tablier (1).

5. Passerelle suivant la revendication 1, caractérisée en ce que les longerons (14, 17) se chevauchent au-dessus de la traverse (8) lorsque la rallonge (8) est sortie.

6. Passerelle suivant la revendication 1, caractérisée en ce que le dispositif de levage du tablier (1) attaque la traverse (18).

7. Passerelle suivant la revendication 1, caractérisée en ce que les longerons (14, 17) sont des profilés en acier normalisés, de préférence en forme de double T.

8. Passerelle suivant la revendication 5, caractérisée en ce que, pour n longerons (17) du tablier (1), la rallonge (8) comporte n + 1 longerons (14).

9. Passerelle suivant la revendication 1, caractérisée en ce que les longerons (14) de la rallonge (8) sont soudés dans la branche (13) verticale de la section (11) coudée de la rallonge.

**Claims**

1. Loading bridge for ramps (3) having a bridge plate (1), the rear end of which is pivotably mounted about a horizontal transverse axis on the ramp (3), and a retractable and extendable extension (8), which is situated at the free end of the bridge plate (1) and is displaceable in the longitudinal direction of the bridge, for the mounting and support on the platform (10) to be loaded or unloaded, wherein the bridge plate (1) has longitudinal support members (17), which lie parallel to one another below a continuous cover plate (15), and is provided, at its edges, with vertically extending lateral plates (16) securely connected to the bridge plate (1), wherein the extension (8) is provided with a portion (11), which extends substantially over the bridge width for the mounting on the platform (10), and also with longitudinal support members (14) which lie parallel to one another, the longitudinal support members extending freely rearwardly from the portion (11) and being retained and guided between the cover plate (15) of the bridge plate (1), on the one hand, and a transverse support member (18), on the other hand, and wherein also the longitudinal support members (14, 17) still overlap one another when the extension (8) is in its extended position above the transverse support member (18), characterised in that the transverse support member (18) is welded, at its end faces, to the lateral plates (16) which laterally define the bridge plate (1) and extend downwardly from the edge of the cover plate (15).

2. Bridge according to claim 1, characterised in that the transverse support member (18) is securely connected to the longitudinal support members (17) of the bridge plate (1).

3. Bridge according to claim 1, characterised in that the longitudinal support members (14) of the extension (8) and the longitudinal support members (17) of the bridge plate (1) are of identical height.

4. Bridge according to claim 1, characterised in that the extension (8) is defined laterally externally by a longitudinal support member (14) which abuts internally against the lateral plate (16) of the bridge plate (1) for this guidance of the extension.

5. Bridge according to claim 1, characterised in that the longitudinal support members (14, 17) overlap one another when the extension (8) is in its extended position above the transverse support member (18).

6. Bridge according to claim 1, characterised in that the lifting mechanism for the bridge plate (1) engages with the transverse support member (18).

7. Bridge according to claim 1, characterised in that the longitudinal support members (14, 17) are standardised, preferably double-T-shaped steel profiles.

8. Bridge according to claim 5, characterised in that, with n longitudinal support members (17) for the bridge plate (1), the extension (8) has n + 1 longitudinal support members (14).

9. Bridge according to claim 1, characterised in that the longitudinal support members (14) of the extension (8) are welded to the vertical arm (13) of the angular portion (11) of the extension.

Fig.1

Fig.2

Fig.3